# EUROPEAN PATENT SPECIFICATION

(11) **EP 2 699 114 B1**
(45) Date of publication and mention of the grant of the patent: **06.06.2018**
(21) Application number: 12735672.3
(22) Date of filing: 20.04.2012
(51) Int. Cl.: B01D 11/02, B01D 11/04, A23L 27/10, A23L 27/00, A23L 33/10, A23L 33/105, A23P 10/30

(54) **ENCAPSULATION OF EXTRACT IN POROUS PARTICLES**
VERKAPSELUNG VON EXTRAKTEN IN PORÖSEN PARTIKELN
ENCAPSULATION D'EXTRAIT DANS DES PARTICULES POREUSES

(30) Priority: 22.04.2011 US 201161478261 P
(43) Date of publication of application: 26.02.2014
(73) Proprietor: PepsiCo, Inc., Purchase, New York 10577 (US)
(72) Inventor: CLARK, Anthony James, New York, New York 10036-2014 (US); FRENCH, Justin Andrew, Frisco, Texas 75033 (US); GEORGE, Eapen, Frisco, Texas 75034 (US); GROVER, Julie Anne, Plano, Texas 75024 (US); TIWARI, Rashmi, White Plains, New York 10603 (US); YEP, Gregory Lee, New Canaan, Connecticut 06840 (US)
(74) Representative: Maiwald Patent- und Rechtsanwaltsgesellschaft mbH
(86) International application number: PCT/US2012/034458
(87) International publication number: WO 2012/145631

(56) References cited:
- EP-A1- 1 795 075
- WO-A1-2004/006967
- WO-A1-2005/110592
- JP-A- H 078 202
- JP-A- 2002 226 445
- US-A- 2 925 344
- US-A1- 2004 119 179
- US-A1- 2005 274 671
- US-A1- 2007 003 492
- US-B1- 6 709 595
- SANGANWAR G P ET AL: "Dissolution-rate enhancement of fenofibrate by adsorption onto silica using supercritical carbon dioxide", INTERNATIONAL JOURNAL OF PHARMACEUTICS, ELSEVIER BV, NL, vol. 360, no. 1-2, 6 August 2008 (2008-08-06), pages 213-218, XP022853145, ISSN: 0378-5173, DOI: 10.1016/J.IJPHARM.2008.04.041 [retrieved on 2008-05-04]
- Tomoyuki Fujii ET AL: "Effect of Solute Adsorption Properties on Its Separation from Supercritical Carbon Dioxide with a Thin Porous Silica Membrane", BIOSCIENCE BIOTECHNOLOGY BIOCHEMISTRY., vol. 60, no. 12, 1 January 1996 (1996-01-01), pages 1945-1949, XP55242732, TOKYO, JAPAN ISSN: 0916-8451, DOI: 10.1271/bbb.60.1945

## Description

### FIELD OF THE INVENTION

This invention relates to a process for making a food additive comprising an extract deposited within porous silica particles as claimed in claim 1, which process comprises a step of supercritical fluid extraction. In particular, this invention relates to a process in which the extract, particularly a fugitive extract, and often an ingestible extract, of a supercritical fluid extraction process is recovered by depositing the extract within the pores of a porous silica particle. In many cases, the resulting porous particle is suitable for direct use as a food additive (such as a flavor or flavorant), or as a nutraceutical.

### BACKGROUND

Extraction is a widely used unit operation for selectively removing one material from a solid or liquid. Extraction of flavor and aroma constituents from natural products using organic solvents is one common example.

Supercritical fluid extraction (SFE) is yet another extraction method that uses a supercritical fluid for selectively extracting one material from a solid or liquid. A supercritical fluid is a liquid or a gas at normal, atmospheric conditions but exists as a single homogeneous fluid phase above its critical temperature (T_{C}) and critical pressure (P_{C}) (known as the supercritical fluid region). As used herein, the phrase "supercritical fluid" may be either a pure substance or a mixture of two or more substances.

Supercritical fluids have a significant capacity to dissolve substances. The ability of a supercritical fluid for selectively dissolving a substance during the extraction process is influenced by the specific conditions of pressure and temperature within the supercritical fluid region at which the extraction is performed and the particular physical and chemical properties of the targeted extractant. Indeed, it is this sensitivity of such solubility to modest changes in temperature and pressure that has increased interest in SFE as a separation tool.

Another aspect that has increased interest in SFE is that by selecting a supercritical solvent with a proper critical temperature (T_{C}), the extraction process may be conducted at a relatively low temperature, thus minimizing and possibly avoiding denaturation or decomposition of heat-liable compounds and loss of volatile components. As a result, supercritical fluid extraction is a technique that has gained acceptance for the extraction of natural products, particularly products for use as food additives, or as nutraceuticals.

The process of SFE generally consists of two essential steps: the extraction of component (the extract) from a substance and the separation of the extract from the supercritical fluid.

In general, the substance for the extraction process is placed into an extraction vessel and is contacted with a supercritical fluid at a specific condition of pressure and temperature within the supercritical fluid region. For solid substances, the extraction is usually conducted batchwise; for liquid substances the extraction can also be batchwise, but alternatively may be continuous.

After the extraction, the supercritical fluid, now-containing the material extracted from the substance (the extract), is passed through a separator and by reducing the pressure and/or changing the temperature, the capacity of the fluid to retain the extract in solution is reduced and a separation between the extraction fluid and the extract occurs. Thus, in many cases an expansion of all the fluid used for the extraction is conducted in order to separate it in the gaseous state from the extracted product which typically remains in the liquid state. Because of the ability to remove substantially all of the extraction fluid from the material extracted (the extract), SFE is often a preferred alternative to liquid extractions using organic solvents, particularly in applications for recovering products destined for use in a food product, or a nutraceutical product.

Solvent extraction, including supercritical fluid extraction, has been used to recover a variety of ingestible constituents, including aromas, flavors, vitamins, antioxidants, caffeine, lipids and the like from natural sources such as plants and animal tissue (plant materials and animal materials). As used throughout the specification and in the claims plant materials and animal materials include any material that is produced by or recovered from, either directly or indirectly, a plant or animal source. Such plant materials would include as non-limiting examples seeds, foliage, roots, bark, and fruits, both raw and processed in any manner, as well as materials derived from such materials, such as cooking oils and other by-products. In a similar fashion, animal materials include as non-limiting examples, tissues, including organs, and skeletal components, both raw and processed in any manner, as well as materials derived from such materials, such as cooking oils other by-products. Potential problems with the use of such extraction methods, including supercritical fluid extraction, is the post-extraction processing needed to recover the extract and the complications presented by the subsequent storage and handling of the extract. Such processing and subsequent storage and handling often can cause post-extraction degradation of extracts, particularly with respect to delicate flavor volatiles and bioactive compounds.

Indeed, the recovery and storage stability of fugitive extracts poses a particular problem. Fugitive extracts are extracts that are likely to evaporate (because of their high volatility), or deteriorate (often because of their susceptibility to oxidation or susceptibility to even small changes in temperature), occurring in a period of time shorter than the time before which they will be used due to time spent during shipment or in inventory storage.

The general procedure of using supercritical carbon dioxide extraction in food processing industry has been described by Raventos, et al., in 2002 (M. Raventos, et al., Application and Possibilities of Supercritical CO2 Extraction in Food Processing Industry: An Overview, Food Sci Tech Int. Vol. 8 (5) (2002) 269-284).

U.S. Patent 4,198,432 describes the use of supercritical fluid extraction for extracting flavor and aroma constituents from natural' spices such as black pepper, cloves, cinnamon and vanilla.

U.S. Patent 4,640,841 describes a process for extracting potential bitterness resins from hops using supercritical carbon dioxide, absorbing the extracted resins on an absorbent such as bentonite in a tank and them removing saturated absorbent from the tank.

U.S. Patent 5,961,835 describes a process in which a substance to be separated is contacted first with a supercritical fluid in an extractor, after which the supercritical fluid containing compounds leaving the extractor undergoes nanofiltration for recovering a permeate flow containing light compounds and a retentate flow containing heavier compounds.

U.S. Patent 6,506,304 describes a process for recovering the supercritical fluid from a mixture containing the supercritical fluid and a solute (extract) which includes contacting the mixture with a molecular sieve membrane at a temperature and a pressure in a critical region of the supercritical fluid and near a critical point of the supercritical fluid so that a permeate rich in the supercritical fluid and a retentate having a enriched concentration of the solute in the supercritical fluid are generated.

Sanganwar, Ganesh P., and Gupta, Ram B., "Dissolution-Rate enhancement of fenofibrate by adsorption onto silica using supercritical carbon dioxide," International Journal of Pharmaceutics, Vol. 360 (2008), pp. 213-218 describes the use of supercritical extraction as a way to load, *i.e.,* adsorb, a poorly water soluble drug, *i.e.,* fenofibrate, onto a high surface area carrier, *i.e.,* non-porous fused silica. By using supercritical extraction as a way to dissolve the drug the problem caused by contamination of residual extraction solvent in the final product is avoided.

US 6,709,595 describes a method and installation for setting in adsorbed state, on a porous support, compounds contained in a product. US 2007/0003492 describes a substance-supporting porous silica. WO 2005/110592 describes a mesoporous inorganic oxide particle loaded with an active substance and multilayer polyelectrolyte coated. EP 1 795 075 describes a process for the preparation of food additives.

US 2004/0119179 describes a method for making very fine particles containing at least an active principle inserted in a host molecule and a device for implementing said method.

US 2005/0274671 describes a method for preparing comopunds for interaction of an active substance hardly soluble in an aqueous medium with a porous support.

WO2004/006967 describes an extruded composition capable of releasing a perfume or flavour when in contact with water.

US 2,925,344 describes a spice concentrate.

JP2002226445 describes a method for extracting capsaicionid-like substances comprising extraction treatment of cayenne.

JPH078202 describes a method for producing spice extract.

Fujii et al. (Bioscience, Biotechnology, and Biochemistry, 1996, 60, 12, 1945-1949) describe the effect of solute adsorption properties on its separation from supercritical carbon dioxide with a thin porous silica membrane.

Finally, pending U.S. Patent Application Serial Number 12/723,100, entitled Anti-Caking Agent for Flavored Products, filed March 12, 2010, describes the use of mesoporous silica particles in a method for flavoring food products wherein a flavorant is loaded in the pores of the silica particles..

The present invention involves an improved method for making a food additive, comprising extracts deposited within porous silica particles, particularly fugitive extracts and especially ingestible extracts produced from a supercritical fluid extraction process as claimed in claim 1. The produced product is suitable for direct use as a flavoring, a flavor enhancer, a taste enhancer, aroma, an aroma enhancer, or another functional ingredient, or as a nutraceutical. The method also improves the retention and integrity of the extract. This result is especially important for fugitive extracts.

### BRIEF SUMMARY OF THE INVENTION

The present invention provides a process for making a food additive comprising an extract, particularly a fugitive extract and especially an ingestible extract, deposited within porous silica particles, which process comprises:
a. performing a supercritical fluid extraction of a plant material or an animal material using an extration fluid to provide a mixture of the extraction fluid and the extract;
b. contacting the mixture of the extraction fluid and the extract with a contained volume of porous silica particles suitable for human consumption, the porous silica particles having pores of a size which permits diffusion of the mixture of extraction fluid and extract into the porous silica particles,
c. reducing the pressure or changing the pressure and temperature of the extraction fluid so that extract deposits within the pores of the porous silica particles:
d. separating the extraction fluid from the porous silica particles; and
e. providing one or more coatings on the exterior surface of the porous particles.

The method finds particular utility in the recovery of fugitive extracts and ingestible extracts.

The method finds particular utility in the recovery of ingestible extracts.

The disclosure also relates to the porous particles containing the captured extract within the pores of the particles as a product of the various methods.

### BRIEF DESCRIPTION OF THE DRAWINGS

Figure 1 is a schematic flow chart of a process of the present disclosure as described in further detail below
Figure 2 is another schematic flow chart of a process of the present disclosure as described in further detail below.
Figure 3 is a schematic flow chart of the experimental super critical carbon dioxide extraction procedure used in connection with Reference Examples 3 and 4.
Figure 4 is a schematic flow chart of the experimental super critical carbon dioxide extraction procedure used in connection with Reference Example 3.
Figure 5 is a schematic flow chart of the experimental super critical carbon dioxide extraction procedure used in connection with Reference Examples 3 and 4.
Figure 6 is a schematic flow chart of the experimental super critical carbon dioxide extraction procedure used in connection with Reference Examples 3 and 4.

### DETAILED DESCRIPTION OF THE INVENTION

The use of fluid extraction for recovering fugitive constituents, including fugitive ingestible constituents such as aromas, flavors, flavor enhancers, aroma enhancers, taste enhancers, antioxidants, vitamins, bioactives, functional ingredients, nutraceuticals, phytochemicals, tastants, and natural colors and the like from natural sources such as plants, marine sources and animal tissue has become widespread. An ingestible extract or constituent is one that can be safely ingested by an animal, including humans.

Fluids that are considered harmless with regard to taste, health and chemical composition are particularly suitable for use as the extraction solvent in connection with the present invention. A non-exhaustive list of potential extraction fluids includes carbon dioxide, water, ethane, propane, nitrous oxide, ethylene, trifluoromethane, and tertafluoroethane. Carbon dioxide is the fluid of choice given its lack of toxicity, low explosion risk, ready availability at low cost and high solvency in its supercritical state.

The invention also contemplates the use of compatible co-solvents, (also referred to as entrainers) such as water, ethanol and propylene glycol, for increasing the solubility of the desired extract (*e.g.,* for enhancing selectivity) in a supercritical extraction fluid. Again, co-solvents that are considered harmless with regard to taste, health and chemical composition should be used.

Supercritical fluids, in particular, optionally in admixture with the co-solvents or entrainers enumerated above, generally possess the ability to extract desired components from a variety of substances, often natural compositions such as plant materials, marine sources and animal tissue, while limiting or avoiding any chemical change in the extract as a consequence of the extraction. This is particularly advantageous with respect to fugitive extracts and ingestible extracts.

The critical point for carbon dioxide is 7.38 MPa at 304.7° K (about 31° C). The corresponding information concerning the critical point for other fluids suitable for use in the extraction process, when conducting the extraction under supercritical fluid conditions in connection with the present invention can be readily determined from the scientific literature. As noted carbon dioxide is the fluid of choice and the SFE conducted with carbon dioxide is generally conducted at a pressure between its P_{C} and 35 MPa and at a temperature between its T_{C} and 120° C. An extraction process using supercritical fluid extraction operating at a pressure above 10 MPa is typical.

In its broadest aspects, the present invention is not limited by the nature of the supercritical extraction process itself. Rather, the supercritical extraction process simply constitutes the process by which the mixture of an extraction fluid and the extract is produced. As a result, in its broadest aspects, the present invention is not limited to any specific apparatus or any specific procedure for conducting the supercritical fluid extraction, which can be conducted in any convenient and acceptable manner either batchwise, or continuously.

Nonetheless, the use of supercritical extraction in combination with the other process aspects of the present invention is particularly advantageous; as the process of supercritical extraction presents a unique integration between the initial separation of the extract from its native source and the subsequent recovery of the extract within the pores of the porous silica particles, as described in more detail hereafter.

In the context of supercritical extraction, in particular, U.S. Patent 7,648,635, for example, describes a method and a related device for conducting a supercritical fluid extraction.

In a batch system, the substance to be subjected to extraction and the supercritical extraction fluid, can simply be added to the extractor, *i.e.,* often a high pressure vessel, optionally fitted with some means for agitating its contents, and the mixture is allowed to reach an equilibrium level of extracted material (extract) in the supercritical extraction fluid. For solid substances, the material generally is converted to an extractable form by crushing, grinding, flaking or other convenient size reduction technique. Then, the extraction fluid bearing the extract is separated from the residual substance that was subject to the extraction. In a continuous extraction process, the extraction fluid can be passed in contact with the liquid substance being treated in either a countercurrent or a co-current manner.

As will be understood by those skilled in the art, if the pressure, temperature and residence time for conducting a supercritical fluid extraction of any specific substance is not known, it can readily be determined by routine experimentation. As with the pressure and temperature at which the extraction process is conducted, if the treatment ratio between the extraction fluid and the substance being treated also is not known it too can be determined by routine experimentation.

As will be appreciated by those skilled in the art, conducting the supercritical fluid extraction at lower temperatures is often preferred as a way of minimizing any loss or degradation of fugitive extracts, including potentially thermally sensitive extracts. As a result, many extractions may be conducted between 30° C and 100° C, and often between 40° C and 60 ° C.

Again, in its broadest aspects the present invention is not limited to any specific procedure for conducting the initial supercritical fluid extraction, which can be conducted in any convenient and acceptable manner either batchwise or continuously.

Following the initial supercritical fluid extraction, the mixture of the extraction fluid and the extract, such as a fugitive extract and particularly an ingestible extract, is ultimately put into contact with porous silica particles that are suitable for human consumption, *i.e.,* are suitable for ingestion. Typically, the porous silica particles are retained in an enclosed volume or container, such as a tank or other vessel that can accommodate the condition (for example the specific temperature and pressure) of the fluid carrying the extract. In a supercritical fluid extraction, the mixture of the extraction fluid and the extract will typically be at an above-atmospheric pressure, *i.e.,* at an elevated pressure.

Usually the porous silica (silicon dioxide) particles are uniformly porous particles having a substantially uniform pore diameter. These particles are suitable for ingestion by animals, particularly humans.

One class of suitable porous silica particles may have a highly ordered hexagonal mesostructure of consistently sized pores having substantially uniform diameter. The high level order of the pore mesostructure is apparent when viewing mesoporous particles under transmission electron microscopy (TEM). Those skilled in the art will understand that these are but one class of porous silica particles that can be used in practicing the method of the present invention and the invention is not limited only to porous silica particles satisfying these characteristics.

As recognized by those skilled in the art, porous silica (silicon dioxide) particles having a substantially uniform pore diameter can be made by a variety of techniques and the present invention does not depend on the use of any specific method.

For example, one class of suitable porous silica particles can be formed by an acid catalyzed condensation reaction, which includes a templating agent, typically a surface active agent or surfactant. In one suitable method, in particular, an acidic, e.g., mineral acid, solution of tetraethyl orthosilicate (TEOS) and ethanol is blended with a templating solution containing ethanol, water and a templating agent, such as an amphiphilic surfactant, and the blended mixture is heated while stirring. One example of a suitable amphiphilic surfactant is a nonionic tri-block copolymer composed of a central hydrophobic chain of polyoxypropylene flanked by two hydrophilic chains of polyoxyethylene. Suitable amphiphilic surfactants are sometimes referred to as poloxamers, and are available under the trade name Pluronics. The molecular structure of Pluronics in general is EOₙPOₘEOₙ, with EO representing ethylene oxide monomer units, PO representing propylene oxide monomer units, n representing the average number of EO monomer units, and m representing the average number of PO monomer units. For Pluronic P104, for example, n=27 and m=61 and the average molecular weight (MW) is 5900 g/mol. For Pluronic F127, for example, n=65.2, and m=200.4 and the average molecular weight (MW) is 12600 g/mol.

As the mixture of the TEOS and templating agent is stirred and heated, the surfactant forms highly ordered micelles which, upon removal of the surfactant in a final step, ultimately leave behind the porous structure within the silicon dioxide matrix. In one approach, after stirring and heating, the TEOS/surfactant mixture is aerosolized in an oven at high temperature (in one embodiment, at a temperature of over 250° C) to produce a powder. The powder then is calcined in an oven at very high temperature (in one embodiment, at a temperature of over 600° C) until the polymer matrix is fully formed and the surfactant and any remaining solvent is removed, leaving a powder comprising discrete, approximately spherical silicon dioxide particles with a highly ordered internal porous structure.

Uniformly porous, approximately spherical silica particles represent a particularly useful class of porous silica particles for use in the context of making a food additive in accordance with the present invention. The integrity of such approximately spherical particles make them especially suited for the high pressures and large pressure changes encountered in the processing encountered in a supercritical extraction.

The porous silica particles for use in the present invention can be separated/classified according to their outside diameter. Particles that range in particle sizes between 3 and 50 microns in diameter, usually between 3 and 20 microns and often between 3 and 5 microns in diameter and having pores sizes smaller than 500 nanometers, usually smaller than 100 nanometers can be obtained and are especially useful in the present invention, especially particles that are substantially spherical in shape. Particularly suitable particles are those with highly ordered and substantially uniform pore sizes ranging between 1 nanometer and 100 nanometers, such as between 1 and 50 nanometers, often between 2 and 25 nanometers, and usually between about 2 nanometers and 12 nanometers. The porosity of suitable particles will typically have a surface area (BET surface area) of at least 200 m²/gm, more often at least 300 m²/gm, usually at least 500 m²/gm, often at least 600 m²/gm and particularly useful are particles with a porous surface area of at least 1000 m²/gm and up to 1,400 m²/gm and higher. In the following Reference Examples 3 and 4, a templated mesoporous silica substrate was used in which the analysis of random selected samples exhibited a BET surface area within the range of 230 to 430 m²/gm.

Mesoporous silica particles with a substantially uniform pore diameter of about 3 nanometers can be produced using the processing specifically described above and cetyl trimethyl ammonium bromide (CTAB) as the templating agent. Mesoporous particles with a substantially uniform pore diameter of about 10.5 nanometers can be produced using a templating agent comprising Pluronic P104 with polypropylene glycol added to core of the micelle. In a preferred embodiment, about 0.18 grams polypropylene glycol (PPG) swelling agent is added for every gram of P104 in the synthesis. Different templating agents can be used to produce particles with other substantially uniform pore sizes.

For more details concerning the preparation of porous silica materials potentially suitable for use as the ingestible porous particles in connection with the present invention please see U.S. Patents Nos. 5,858,457; 6,334,988; 6,387,453 (RE 41,612); 6,638,885; 7,338,982 and 7,405,315 and pending U.S. Patent Application Serial Number 12/723,100, published as U.S Published Patent Application No. 2011-0223297. Nonetheless, as noted earlier, the present invention is not limited to these methods, but can take advantage of any method that is suitable for producing porous silica particles with a substantially uniform porosity and especially substantially spherical particles.

In any event, the porous ingestible silica particles have pores sufficiently sized to permit ready diffusion of the mixture of extraction fluid and extract throughout their volume. In this way, the pores of the porous silica particles are filled with a mixture of the extraction fluid and the extract.

In order to deposit and retain the extract in the porous ingestible silica particles the temperature and/or pressure of the mixture of the supercritical extraction fluid and extract is changed. When the extraction process employs a supercritical fluid extraction process, the extraction mixture recovered from the extraction will be at an elevated pressure, though often at a sub-critical value. Typically, the properties, *i.e.,* temperature and pressure, of the mixture of the extraction fluid and extract are controlled so that the mixture remains in the liquid state at least until the mixture is brought into contact with the porous silica particles and permeates the porosity of the particles. Eventually, the pressure of the extraction fluid is reduced, or both the temperature and the pressure of the extraction fluid are altered to facilitate deposition of the extract within the pores of the porous ingestible silica particles and separation of the particles from some and preferably all of the extraction fluid.

In a supercritical fluid extraction process, the change in the properties of the extraction fluid causes or facilitates the extract to separate, e.g., to precipitate, from the fluid and deposit within the pores of the porous silica particles.

The phase separation between the extraction fluid or extraction solvent and the extract, often also referred to as the solute, may occur after the fluid containing the extract has permeated the pores of the porous silica particles and thus occurs within the contained volume of the porous particles in the pressure vessel (*i.e.,* within the contained volume of the recovery vessel itself. In particular, by changing a condition of the extraction fluid its solvating power is reduced by the change in properties (*e.g.,* a change in state caused by a change in pressure and/or temperature) so that the extract deposits in and throughout the pores of the ingestible porous particles. When the extraction fluid is recovered from a supercritical fluid extraction process, the separation is preferably caused by reducing the pressure of the extraction fluid to a condition where the extraction fluid converts at least in part to a gaseous state. The temperature also can additionally be altered, for example either reduced, or increased in order to assist in the deposition of the extract within the pores of the ingestible porous particles. Still other combinations of a temperature change and a pressure reduction may be used in aspects of the present invention to cause or facilitate the desired separation, for example a phase separation, between the extraction solvent recovered from a supercritical fluid extraction, and the extract.

When the mixture of extraction fluid and extract from the supercritical fluid extraction process is obtained, the gas produced from the extraction solvent recovered from the supercritical fluid extraction, now freed of some if not all of the extract, may be discharged from the contained volume of the separation vessel (the recovery vessel) and, following any temperature adjustment in a heat exchanger and a pressure increase in a pump or compressor, can be recirculated to the extractor in its supercritical state for further use in the extraction.

The porous silica particles now loaded with extract are separately removed from the contained volume of the separation vessel (recovery vessel) and are recovered as the desired product, *i.e.,* particles containing deposited extract. The silica particles containing the extract are often directly suitable for human consumption.

The present invention contemplates providing one or more barriers or coatings on the exterior surface of the porous silica particles following the capture of the extract within the pores. Such barriers or coatings could include diffusion barriers, barriers that melt when placed into a warm environment, and barriers that dissolve in an aqueous or specific pH environment. Melt barriers can include, among other things, edible waxes or lipids. Diffusion and dissolution barriers can include gelled proteins, hydrocolloids, carbohydrates, starches, and polysaccharides, among others. The subsequent release or extraction of the extract from the pores of the particles is influenced by providing sets of particles with barriers made of different materials, of different thicknesses, of different diffusion or dissolution rates, or a combination of these. Such barrier coatings can be applied by known techniques, such as spraying, sprinkling or panning.

The application of such barriers or coatings can help stabilize and preserve the integrity of fugitive extracts captured within the pores of the porous silica particles.

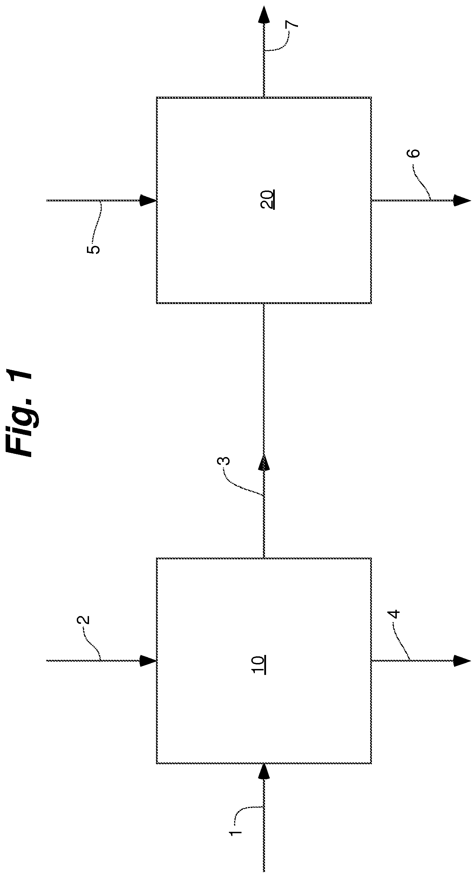

Figure 1 illustrates a schematic flow chart of a process of the present disclosure.

A natural material, such as a natural spice (*e.g.,* vanilla, cinnamon, cloves, black pepper and the like) or a plant material (such as orange peels) is introduced into the extraction vessel 10 through inlet 1. The natural material can be fed batchwise or continuously depending upon the specific details of extraction vessel 10 and the material. An extractant, such as dry CO₂ in a supercritical state, is separately introduced into the extraction vessel 10 though inlet 2. Again, depending upon the specific details of the extraction vessel 10, the supercritical CO₂ can be added for batchwise or continuous processing. In the extraction vessel 10, a mixture of the extraction fluid and an extract (caused by selective extraction of the extract (such as a fugitive and possibly ingestible extract such as flavor and aroma constituents) from the natural material) is created and is removed though outlet 3. Spent natural material, *i.e.,* natural material having a reduced content of the flavor and aroma constituents is removed from the extraction vessel 10 in outlet 4.

In some circumstances, it may be desirable to include water, or another polar co-solvent, in the extraction fluid to alter the polarity of the extraction fluid and accordingly modify the spectrum of the extracts recovered from the natural material being treated and possibly influence the deposition of extracts within the porous particles in accordance with the present invention. By including a more polar co-solvent with the main extraction fluid, one should be able to enhance the extraction of polar (*e.g.,* hydrophilic) extracts, including polar aroma and flavor constituents and may also impact how these extracts are deposited into and throughout the pores of the porous particles. Fortuitously, certain plant and animal materials that can be processed in accordance with the present invention inherently contain residual moisture. By subjecting these materials to an extraction process, and particularly a supercritical extraction, in a manner which allows these materials to retain their inherent moisture during the extraction, one should be able to capitalize on the material's inherent moisture to facilitate a greater recovery of desirable polar extracts during the extraction and within the porous particles. This aspect of the invention is illustrated hereafter in connection with the extraction of orange constituents in Reference Example 4.

The mixture of the extraction fluid and an extract in conduit 3 then is passed into the contained volume of vessel 20 where the mixture containing the extract permeates the pores of the uniformly porous silica particles that are held in inventory in the vessel 20, and allows the extract to eventually be deposited into and throughout the pores of the porous silica particles. The porous silica particles can be introduced into vessel 20 through inlet 5. The property of the mixture of the extraction fluid and the extract is altered within vessel 20 in a way that causes or facilitates the extract to be deposited into and throughout the pores of the porous silica particles. Thereafter, the porous silica particles containing the extract is removed from vessel 20 in outlet 6 separate from spent extraction fluid recovered in outlet 7.

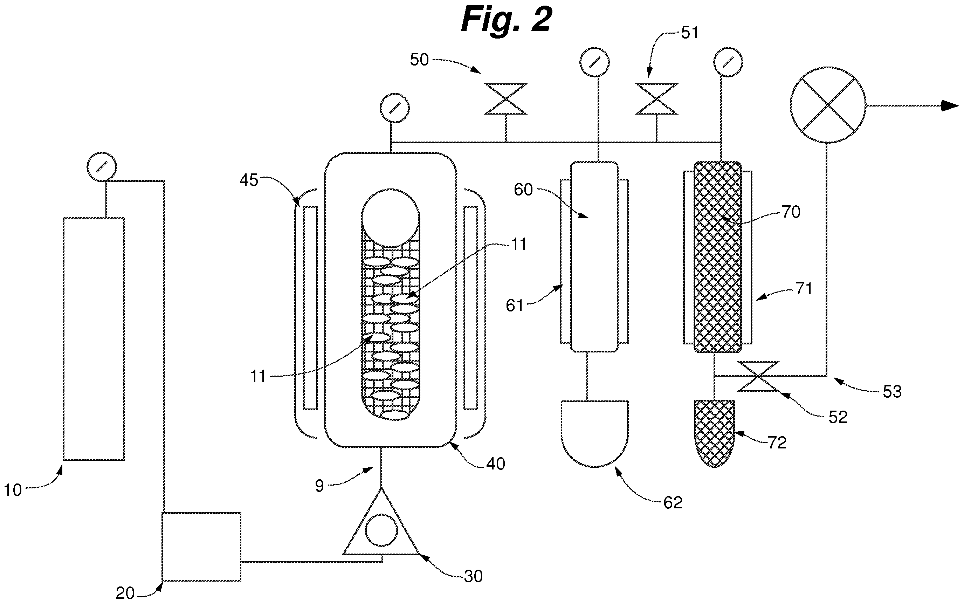

Figure 2 illustrates another schematic flow chart of yet another embodiment of the present disclosure. In Figure 2, a source of extraction fluid, such as liquid CO₂, is obtained from storage tank 10 is chilled in chiller 20, is pumped to a supercritical pressure above about 1000 psi (6.9 MPa) in pump 30 and is introduced into supercritical extraction vessel 40 through inlet 9. The supercritical extraction vessel 40 has been previously supplied with a natural material, such as orange peels 11 from which a desired extract is to be recovered. Alternatively, the supercritical extraction vessel 40 could be charged with a non-polar liquid containing a desired extract, such as an oil that contains flavor components, such as a spent cooking oil. The supercritical extraction vessel 40 is fitted with a heater 45 to permit maintaining the contents of the vessel at a suitable temperature. Within vessel 40 the supercritical CO₂ extraction fluid and the natural material are contacted in a manner to cause the desired selective extraction of various constituents of the natural material, including the ultimately desired extract or extracts, into the extraction fluid/solvent.

Under the control of forward pressure valve 50, the pressure of the mixture of the extraction fluid and extracted constituents is reduced partially to cause or facilitate a first fraction of the extracted constituents to separate from the remaining mixture of the extraction fluid and extracted constituents. For example, a reduction in pressure from greater than 1000 psi (6.9 MPa) to about 700 psi (4.8 MPa) may be suitable for this first stage. This first fraction of extracted constituents is recovered separately from the mixture in separator 60, which also is fitted with a heater 61 to permit maintaining the contents of the separator 60 at a suitable temperature. The first fraction of extracted constituents is thus recovered in vessel 62. Under the control of forward pressure valve 51, the pressure of the mixture of the extraction fluid and remaining extracted constituents is further reduced, for example down to about 350 psi (2.4 MPa), this time in the presence of porous particles of a uniformly porous silica to cause or facilitate the desired extract to be deposited within and throughout the pores of the porous silica in infuser 70, which also is fitted with a heater 71 to permit maintaining the contents of the infuser 70 at a suitable temperature. The porous silica containing the desired extract is thus recovered in vessel 72. The now-gaseous CO₂ extraction fluid is discharged through valve 52 and conduit 53.

Several advantages are realized by causing the extract to be deposited directly from the extraction fluid into the pores of the porous silica particles. With direct deposition of the compounds into the porous silica particles one is able to eliminate any need for intermediary recovery and processing steps, which in the case of a fugitive extract, such as highly volatile aroma or flavor essences, such as thermally unstable or thermally sensitive compounds, such as easily oxidized compounds and the like in particular, enhances the overall recovery and quality of the isolated and recovered extract. Also, one can tailor the property of the porous silica particle in a way both to maximize the recovery of the desired extract and optimize its subsequent use, such as its use as a source of aroma, such as its use as a food additive, such as its use as a flavoring, such as its use as a flavor enhancer, such as its use as a taste enhancer, or its use as another functional ingredient, such as a nutraceutical.

As noted above, by subsequently coating the porous particles with the captured extract, the stability and integrity of the captured fugitive extract may be preserved even longer.

For best results, the extract, either by itself or in conjunction with an additional carrier fluid or solvent (including the extraction fluid), should exhibit wetting or partial wetting of the surface of the porous silica particles, so as to facilitate the mixture of the extraction fluid and extract permeating the porosity of the porous silica particles. An extract or a mixture containing the extract exhibits desired wetting behavior when a drop of the extract or mixture is applied to a flat, horizontal surface made of the same material that makes up the porous particle and the drop exhibits a contact angle of less than 90°. Nonetheless, the present invention is not limited solely to the capture of extracts and extract mixtures that exhibit wetting behavior, since the extraction fluids recovered from supercritical fluid extraction processes introduces even non-wetting extracts into the pores of the porous silica particles and the change in state (*e.g.* liquid to gas) of these extraction fluids causes the extract to be directly deposited inside the pores of the particles.

The coated extract-loaded particles can then be used in a wide variety of food products, including beverages, and with nutraceutical products, limited only by any restriction on the use of the extract itself. Advantages of the present invention include improved stability of the extracted material in the final product, particularly improving the retention of the functional properties of a fugitive extract; improved shelf-life of the final product (protection of the extracted material from degradation or volatilization); improved ease of incorporation of the extracted material into a final product and improved products for healthier food and beverage options and health and wellness offerings.

The disclosure also relates to the porous particles containing the captured extract within the pores of the particles as a product of the various embodiment of the methods.

### EXAMPLES

### REFERENCE EXAMPLE 1

"Fried Potato Chip" Flavor is extracted via a supercritical CO₂ extraction process from used potato chip fryer oil and/or fried potato chips. Thereafter, the mixture of CO₂ and ingestible "Fried Potato Chip" flavor are directed to a vessel containing a uniformly porous silica. As a consequence of contact between the mixture of CO₂ and ingestible "Fried Potato Chip" flavor and the porous silica, the pores of the porous silica become filled with the mixture of liquid CO₂ and the ingestible flavor extract. Then, the pressure of the liquid CO₂ is reduced, or both the temperature and the pressure of the fluid are altered to values, causing the flavor extract to separate and deposit within the pores of the silica. This porous ingestible silica containing the "Fried Potato Chip" Flavor is added to salt to form a seasoning and topically applied to reduced fat or baked potato chips, providing a sensory experience more similar to that of a fried potato chip.

### REFERENCE EXAMPLE 2

Oranges are processed via a supercritical CO₂ extraction process in such a way to extract the ingestible compounds responsible for flavor and the phytochemicals. Thereafter, the mixture of CO₂ and these ingestible extracts are directed to a vessel containing a uniformly porous silica. As a consequence of contact between the mixture of CO₂ and the ingestible extract and the porous silica, the pores of the porous silica become filled with the mixture of the liquid CO₂ and the flavor/phytochemical extract. Then, the pressure of the CO₂ is reduced, or both the temperature and the pressure of the extraction fluid are altered to values causing the flavor/phytochemical extract to separate and deposit within the pores of the silica. This silica containing the orange flavor and phytochemicals is added to instant oatmeal for an enhanced flavor and health experience.

### REFERENCE EXAMPLE 3

In this example Supercritical CO₂ fluid extraction (SFE) of Lay's Classic Potato Chips was performed and the resulting extract was collected in three sequentially arranged separators and in a final cold trap by the following protocol.

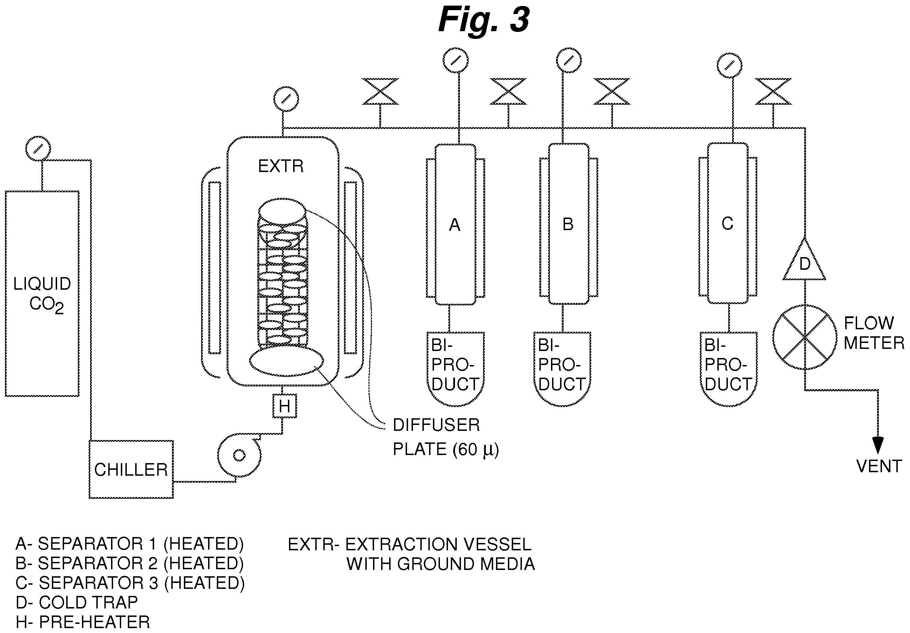

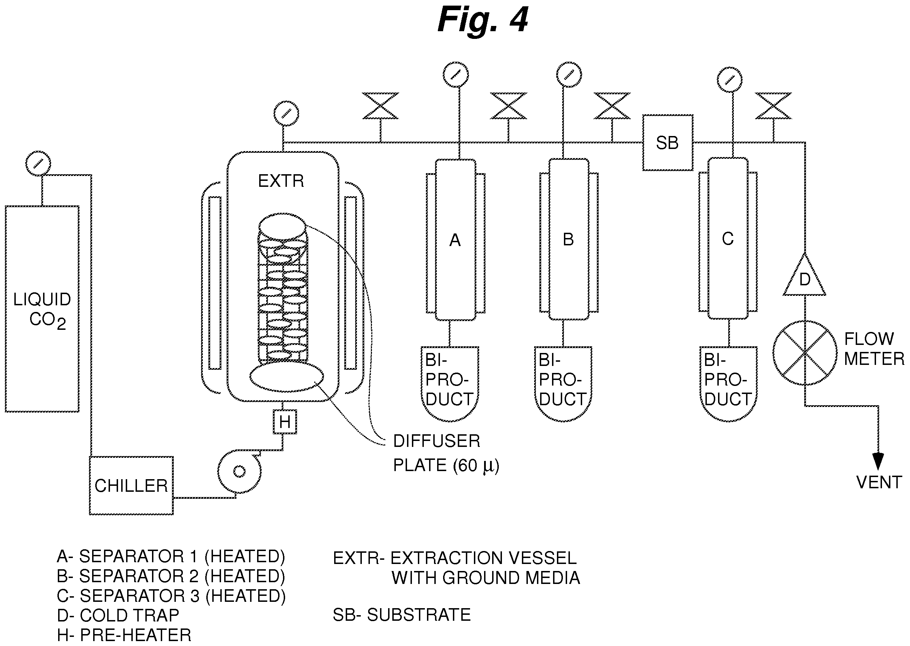

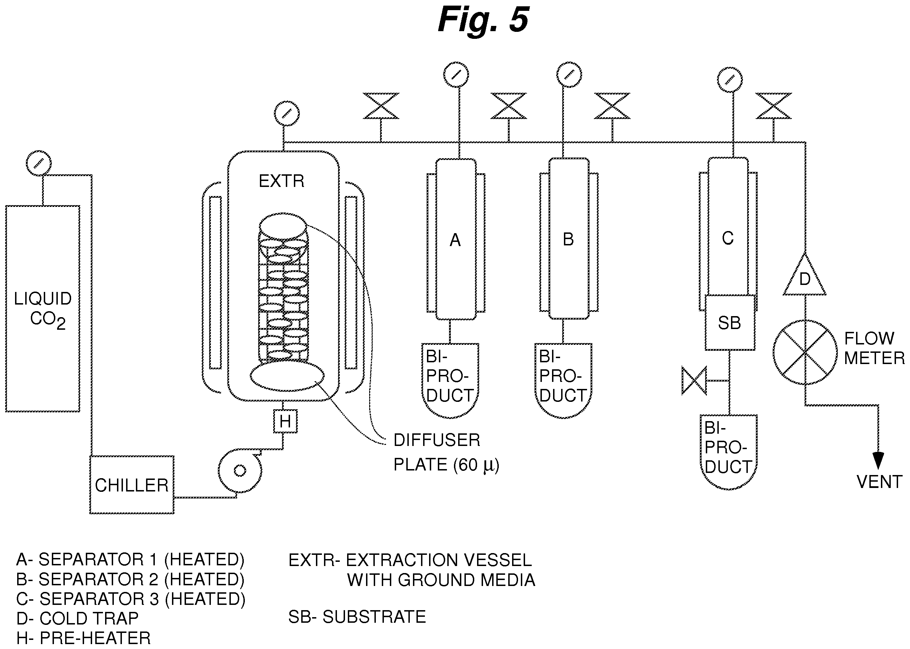

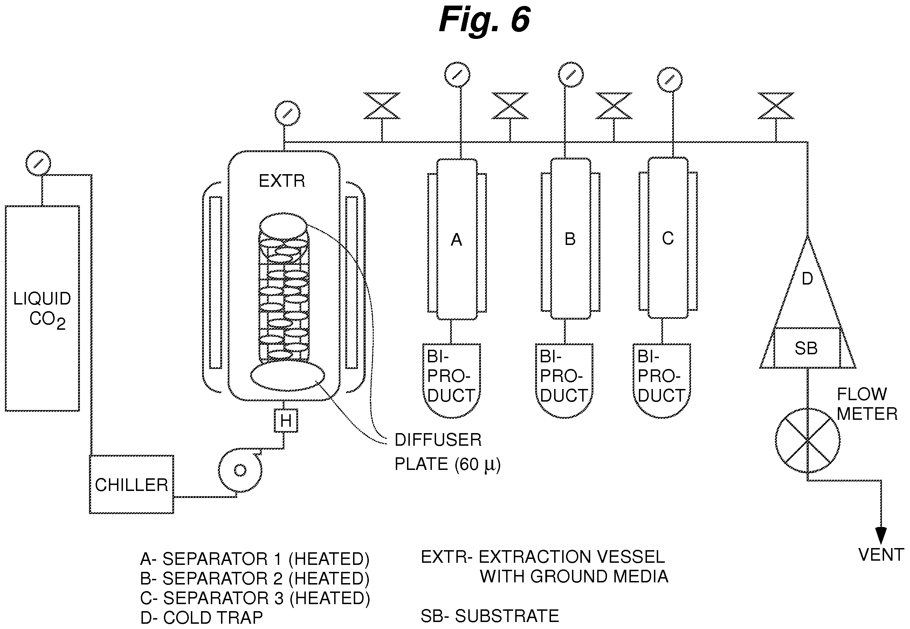

The potato chips (the average thickness of an unbroken chip was 0.13 cm) were ground using a mortar and pestle then the ground potato chip particles were sieved between 0.24 and 0.14 cm. 60 grams of the ground potato chips then were placed in a sample basket. The sample basket was placed in a 500cc supercritical extraction vessel containing a 60 micron sintered disk at the entrance and exit of the vessel. The ground potato chips were contacted (extracted) with supercritical fluid (CO₂) at 4000 PSI (about 27.6 MPa) and 35°C at a flow rate of 0.02 kg CO₂/min. The resulting extract then was passed through a series of separators, where the pressure was reduced at each to cause the extract to separate from the CO₂. The reduced pressure at the first separator was 3000 PSI (about 20.7 MPa). The reduced pressure at the second separator was 2000 PSI (about 13.8 MPa). The reduced pressure at the third separator was 1000 PSI (about 6.9 MPa). A cold trap was placed at the vent to collect any remaining volatile flavor compounds. The apparatus arrangement for each test is schematically illustrated in Figures 3 through 6.

In the various tests, about 0.3 grams of a substrate (mesoporous silica) was placed in one of three different locations in the SFE set-up. Four experiments were performed as outlined below:
1) Without substrate
2) Substrate placed in-line between Separator 2 and Separator 3;
3) Substrate at the base of Separator 3, and
4) Substrate in the Cold Trap

The cold trap sample not containing the substrate was collected via a hexane wash.

Four key flavor compounds in the recovered extracts were selected to measure in terms of the amount collected suitable for indicating the relative ratios of each. The four compounds were methional, phenylacetaldehyde, dimethyl-ethyl-pyrazine and t,t-2,4-decadienal. Methional and phenylacetaldehyde are both Strecker Aldehydes arising from a Maillard Reaction during the frying process. Dimethyl-ethyl-pyrazine can be categorized as a Pyrazine resulting from the Maillard Reaction during the frying process. The t,t-2,4-decadienal compound results from oil oxidation.

Tables 1-4 hereafter show the relative amounts of these four key flavor compounds (1) methional; (2) phenylacetaldehyde; (3) dimethyl-ethyl-pyrazine; and (4) t,t-2,4-decadienal which were collected at each location during recovery of the extract in each of the 4 experiments. The data was measured by GC-MS (gas chromatography-mass spectrometry) where a SPME (solid phase micro-extraction) procedure was followed for all the samples with the exception that the cold trap samples without substrate collected by hexane washes followed a liquid injection process.

**Table 1**

| Amounts of 4 key flavor compounds collected via SFE (without substrate) | | | | |
|---|---|---|---|---|
| | **Methional (ppm)** | **Phenylacetaldehyde (ppm)** | **dimethyl-ethyl-pyrazine (ppm)** | **2,4-decadienal (ppm)** |
| SEPARATOR 1 | 0.0065 | 0.0461 | 0.0046 | 1.7627 |
| SEPARATOR 2 | 0.0118 | 0.0072 | 0.0010 | 0.1223 |
| SEPARATOR 3 | 0.0096 | 0.1589 | 0.0095 | 3.8578 |
| COLD TRAP | 0.003 | 0.017 | 0.006 | 0.192 |
| ***total*** | ***0.0307*** | ***0.2291*** | ***0.0214*** | ***5.9347*** |

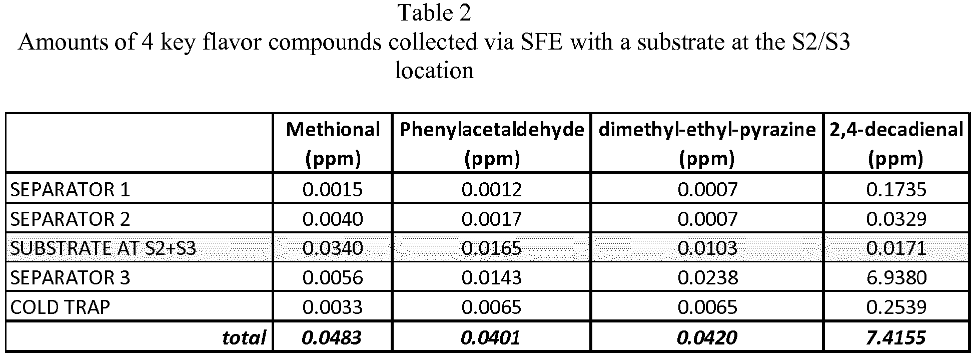

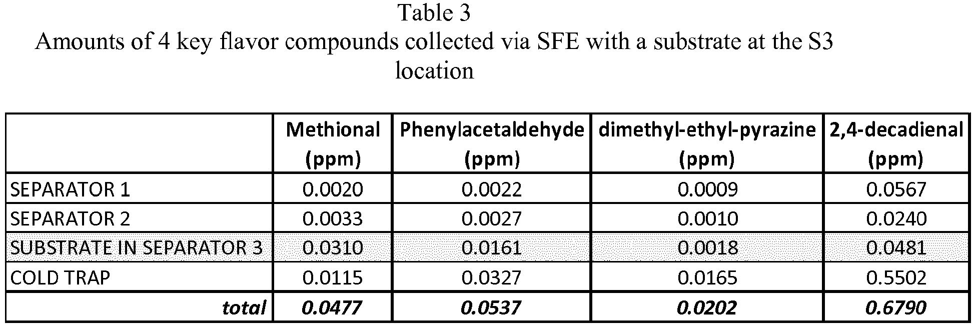

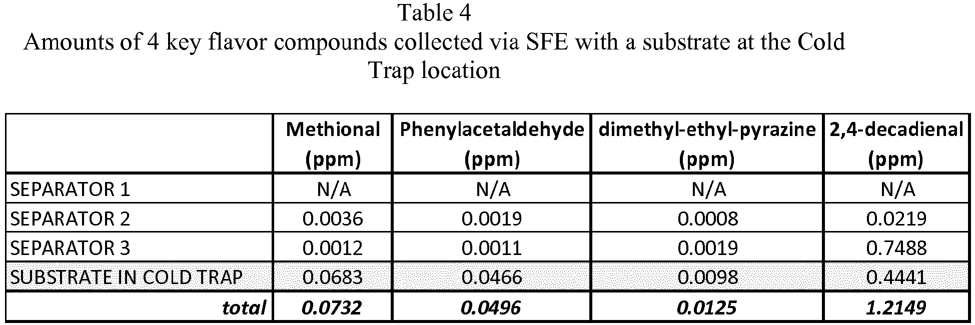

In Classic Lay's Potato Chips these four key flavor compounds (1) methional; (2) phenylacetaldehyde; (3) dimethyl-ethyl-pyrazine; and (4) t,t-2,4-decadienal are typically present in the following relative amounts respectively: (1) 5.00, (2) 2.90, (3) 0.15 and (4) 0.10.

From an analysis of the data it can be shown that the relative ratios of these four key flavor compounds are better maintained in the extracts recovered from the substrates than in the extracts collected without the substrate. For example, the extract recovered in the substrate tended to have a lower level of the oil oxidation product, t,t-2,4-decadienal, than compared to extracts recovered without the substrate. As a result, the substrate recovered extracts tended to be closer to the flavor composition of the Classic Lay's Potato Chips.

### REFERENCE EXAMPLE 4

In this example Supercritical CO₂ fluid extraction (SFE) of orange peel (Test series A) and orange fruit (Test Series B) was performed and the resulting extract was processed through three sequentially arranged separators and in a final cold trap by the following protocol.

Hamlin variety oranges were processed in the following manner to produce material subjected to supercritical carbon dioxide extraction. In one set of experiments (Test Series A), the peel of ten oranges were washed with deionized water, sliced, frozen with liquid nitrogen, ground in liquid nitrogen in a stainless steel blender and stored at minus 80 °C until used. This orange peel material will be identified as "liquefied orange peel." In a second set of experiments (Test Series B), ten oranges were washed with deionized water, the peel was removed by hand (along with as much of the white albedo as could be removed), the fruit was separated into individual wedges from which any large seeds were removed, each wedge was cut in half, the halves were frozen in liquid nitrogen, ground in liquid nitrogen in a stainless steel blender and stored at minus 80 °C until used. This orange material will be identified as "liquefied whole orange."

One hundred grams of either the liquefied orange peel (Test Series A), or the liquefied whole orange (Test Series B) then were placed in a sample basket in the respective series of tests. The sample basket was placed in a 500cc supercritical extraction vessel containing a 60 micron sintered disk at the entrance and exit of the vessel. The respective orange materials were contacted (extracted) with supercritical fluid (CO₂) at 4000 PSI (about 27.6 MPa) and 35°C at a flow rate of 0.02 kg CO₂/min. The resulting extract then was passed through a series of separators, where the pressure was reduced at each eventually causing extract to separate from the CO₂. The reduced pressure at the first separator was 3000 PSI (about 20.7 MPa). The reduced pressure at the second separator was 2000 PSI (about 13.8 MPa). The reduced pressure at the third separator was 1000 PSI (about 6.9 MPa). A cold trap was placed at the vent to collect any remaining volatile flavor compounds. The apparatus arrangement for each test is schematically illustrated in Figures 3, 5 and 6.

In the various tests, about 0.3 grams of a substrate (mesoporous silica) was placed in one of two different locations in the SFE set-up. Three experiments were performed in each of Test Series A and in Test Series B as outlined below:
1) No Substrate
2) Substrate at the base of Separator 3, and
3) Substrate in the Cold Trap

In particular, in Test Series A, 0.32 g and 0.34 g of substrate was placed at the base on Separator 3 and in the Cold Trap respectively; in Test Series B, 0.32 g and 0.26 g of substrate was placed at the base on Separator 3 and in the Cold Trap respectively.

The cold trap samples were collected via a hexane wash.

Ten key flavor compounds in the recovered extracts were selected to measure in terms of the amount collected suitable for indicating the relative ratios of each. The ten compounds were valencene, geranial, carvone, terpine-4-ol, linalool, limonene, p-cymene, octanal, ethyl butyrate and acetaldehyde.

Table 5 shows the overall amounts of flavor components (both with limonene and on a limonene-free basis) recovered in Test Series A and Table 6 shows the overall amounts of flavor components (both with limonene and on a limonene-free basis) recovered in Test Series B.

**Table 5**

| Test Series A Total Flavor | | |
|---|---|---|
| | Total Flavor (ppm) With Limonene | Total Flavor (ppm) Without Limonene |
| Separator 3 without Substrate | 83.63 | 2.780 |
| Separator 3 with Substrate | 12.02 | 0.2009 |
| Cold Trap without Substrate | 1483.65 | 101.94 |
| Cold Trap with Substrate | 51.59 | 2.147 |

**Table 6**

| Test Series B Total Flavor | | |
|---|---|---|
| | Total Flavor (ppm) With Limonene | Total Flavor (ppm) Without Limonene |
| Separator 3 without Substrate | 0.2141 | 0.0068 |
| Separator 3 with Substrate | 0.1857 | 0.1285 |
| Cold Trap without Substrate | 0.1303 | 0.0611 |
| Cold Trap with Substrate | 1.629 | 0.2113 |

Table 7 shows the Test Series A results with substrate and Table 8 shows the Test Series B results with substrate providing the relative amounts of the ten key flavor compounds which were collected at each of the two enumerated locations during recovery of the extract. The data was measured by GC-MS (gas chromatography-mass spectrometry) where a SPME (solid phase micro-extraction) procedure was followed for the samples collected at the base of Separator 3 and in the case of the Cold Trap sample a hexane wash was used to obtain the samples and the samples were analyzed using a direct liquid injection technique.

**Table 7**

| Test Series A Amounts of 10 key flavor compounds | | | | |
|---|---|---|---|---|
| Flavor Component | Separator 3 Without Substrate | Separator 3 With Substrate | Cold Trap Without Substrate | Cold Trap With Substrate |
| | | | | |
| Valencene | 0.5775 | 0.03112 | 55.037 | 0.9163 |
| Geranial | 0.5465 | 0.01611 | 18.14 | 0.07790 |
| Carvone | 0.0567 | 0.002500 | 1.585 | 0.01911 |
| Terpine-4-ol | 0.0231 | 0.003662 | 0.6720 | 0.04119 |
| Linalool | 1.159 | 0.08092 | 21.105 | 0.49290 |
| Limonene | 80.85 | 11.82 | 1381.6 | 49.381 |
| p-cymene | 0 | 0.00683 | 0.07941 | 0.01702 |
| Octanal | 0.4153 | 0.05921 | 5.3229 | 0.58102 |
| Ethyl butyrate | 0.00023 | 0.00026 | 0 | 0.001375 |
| acetaldehyde | 0.00141 | 0.00033 | 0 | 0.000515 |

**Table 8**

| Test Series B Amounts of 10 key flavor compounds | | | | |
|---|---|---|---|---|
| Flavor Component | Separator 3 Without Substrate | Separator 3 With Substrate | Cold Trap Without Substrate | Cold Trap With Substrate |
| | | | | |
| Valencene | 0.00160 | 0 | 0.03960 | 0.011345 |
| Geranial | 0.000147 | 0 | 0 | 9.694E-5 |
| Carvone | 0 | 0. | 0 | 0.000303 |
| Terpine-4-ol | 0 | 0 | 0 | 0.000182 |
| Linalool | 0 | 7.9543E-05 | 0 | 0.001927 |
| Limonene | 0.20725 | 0.05716 | 0.06918 | 1.418 |
| p-cymene | 0.00343 | 0.00166 | 0 | 0.01573 |
| Octanal | 0.000803 | 0.11280 | 0.01993 | 0.01235 |
| Ethyl butyrate | 0.000594 | 0.012693 | 0.00162 | 0.16906 |
| acetaldehyde | 0.000252 | 0.001263 | 0 | 0.000320 |

For the most part, the extracted flavor was dominated by the non-polar compound limonene. In Test Series A, besides limonene, the main flavor extracted flavor components were linalool, octanal and geranial. In Test Series B, besides limonene, the main flavor extracted flavor components were ethyl butyrate, valence and octanal.

For comparison, the distribution of these ten flavor components in 100% Valencia orange juice is shown in Table 9.

**Table 9**

| Amounts of 10 key flavor compounds in Valencia Orange Juice | |
|---|---|
| Flavor Component | 100% Valencia Juice |
| | (ppm) |
| Valencene | 5.19 |
| Geranial | 0.03 |
| Carvone | 0.07 |
| Terpine-4-ol | 0.34 |
| Linalool | 1.6 |
| Limonene | 171.45 |
| p-cymene | 0.01 |
| Octanal | 0.641 |
| Ethyl butyrate | 0.032 |
| acetaldehyde | 9.0 |

As shown, key orange flavor components were successfully isolated with the porous substrates using supercritical fluid extraction.

From an analysis of the data in the Tables above, one can determine the ratio of the various flavor components as collected with the porous particles were different with and without the use of the porous particles in collecting the extracted flavors.

It should be understood that the use of a singular indefinite or definite article (e.g., "a," "an," "the," etc.) in this disclosure and in the following claims follows the traditional approach in patents of meaning "at least one" unless in a particular instance it is clear from context that the term is intended in that particular instance to mean specifically one and only one. Likewise, the term "comprising" is open ended, not excluding additional items, features, components, etc.

## Claims

1. A process for making a food additive comprising an extract deposited within porous silica particles, which process comprises:
a. performing a supercritical fluid extraction of a plant material or an animal material using an extraction fluid to provide a mixture of the extraction fluid and the extract;
b. contacting the mixture of the extraction fluid and the extract with a contained volume of porous silica particles suitable for human consumption, the porous silica particles having pores of a size which permits diffusion of extract into the porous silica particles;
c. reducing the pressure or changing the pressure and temperature of the extraction fluid so that extract deposits within the pores of the porous silica particles;
d. separating the extraction fluid from the porous silica particles; and
e. providing one or more coatings on the exterior surface of the porous particles.

2. The process of claim 1, further comprising adding the food additive to a food product.

3. The process of claim 2, wherein the food product is a beverage.

4. The process of claim 1 wherein:
a. the mixture is provided at an elevated pressure from the supercritical fluid extraction;
b. the mixture of the extraction fluid and the extract is contacted with the contained volume of porous silica particles at the elevated pressure;
c. reducing the pressure of the mixture so that extract deposits within the pores of the porous silica particles separate from gaseous extraction fluid.

5. The process of any of the preceding claims, wherein the extract is a fugitive extract.

6. The process of claim 5, wherein the fugitive extract is also an ingestible extract.

7. The process of any of the preceding claims, wherein the porous silica particle has a diameter between 3 and 20 microns and a substantially uniform porosity.

8. The process of any of the preceding claims, wherein the extract is selected from the group consisting of aromas, flavors, flavor enhancers, aroma enhancers, taste enhancers, antioxidants, vitamins, bioactives, functional ingredients, nutraceuticals, phytochemicals, tastants, and natural colors.

9. The process of any of the preceding claims, wherein the extraction fluid is carbon dioxide.

10. The process of any of the preceding claims, wherein the one or more coatings comprise a diffusion barrier, a barrier that melts when placed into a warm environment, and/or a barrier that dissolves in an aqueous or specific pH environment.

## Patentansprüche

1. Ein Verfahren zur Herstellung eines Nahrungsmittelzusatzes umfassend einen Extrakt, der in porösen Silica-Partikeln abgelagert ist, wobei das Verfahren umfasst:
a) Durchführen einer superkritischen Flüssigkeitsextraktion eines pflanzlichen Materials oder eines tierischen Materials, wobei eine Extraktionsflüssigkeit genutzt wird um eine Mischung aus Extraktionsflüssigkeit und Extrakt zu erhalten;
b) in Kontakt bringen der Mischung aus Extraktionsflüssigkeit und Extrakt mit einer enthaltenen Menge an porösen Silica-Partikeln, die für den menschlichen Verzehr geeignet sind, wobei die porösen Silica-Partikel Porengrößen aufweisen, welche die Diffusion von Extrakt in die porösen Silica-Partikel ermöglichen;
c) Reduzieren des Drucks oder Ändern des Drucks und der Temperatur der Extraktionsflüssigkeit, so dass sich der Extrakt in den Poren der porösen Silica-Partikel ablagert;
d) Separieren der Extraktionsflüssigkeit von den porösen Silica-Partikeln; und
e) Zur Verfügung stellen einer oder mehrerer Beschichtungen auf der äußeren Oberfläche der porösen Partikel.

2. Das Verfahren nach Anspruch 1, weiterhin umfassend das Hinzufügen des Nahrungsmittelzusatzes zu einem Nahrungsmittel.

3. Das Verfahren nach Anspruch 2, wobei das Nahrungsmittel ein Getränk ist.

4. Das Verfahren nach Anspruch 1, wobei:
a) die Mischung erhalten wird bei erhöhtem Druck von der superkritischen Flüssigkeitsextraktion;
b) die Mischung aus der Extraktionsflüssigkeit und dem Extrakt mit der enthaltenen Menge an porösen Silica-Partikel bei dem erhöhten Druck kontaktiert wird;
c) der Druck der Mischung reduziert wird, so dass der Extrakt in den Poren der porösen Silica-Partikeln separat von der gasförmigen Extraktionsflüssigkeit abgelagert wird.

5. Das Verfahren gemäß eines jeden der vorangehenden Ansprüche, wobei der Extrakt ein flüchtiger Extrakt ist.

6. Das Verfahren nach Anspruch 5, wobei der flüchtige Extrakt auch ein einnehmbarer Extrakt ist.

7. Das Verfahren gemäß eines jeden der vorangehenden Ansprüche, wobei der poröse Silica-Partikel einen Durchmesser zwischen 3 und 20 Mikrometern und eine im Wesentlichen gleichmäßige Porösität aufweist.

8. Das Verfahren gemäß eines jeden der vorangehenden Ansprüche, wobei der Extrakt ausgewählt ist aus der Gruppe bestehend aus Aromen, Duftstoffen, Duftverstärkern, Aromaverstärkern, Geschmacksverstärkern, Antioxidantien, Vitaminen, bioaktiven Inhaltsstoffen, funktionellen Inhaltsstoffen, Nahrungsergänzungsmitteln, Pflanzenstoffen, Geschmacksstimulantien, und natürlichen Farbstoffen.

9. Das Verfahren gemäß eines jeden der vorangehenden Ansprüche, wobei die Extraktionsflüssigkeit Kohlenstoffdioxid ist.

10. Das Verfahren gemäß eines jeden der vorangehenden Ansprüche, wobei die eine Beschichtung oder die mehreren Beschichtungen eine Diffusionsbarriere, eine Barriere, welche in einer warmen Umgebung schmilzt, und/oder eine Barriere, welche sich in einer wässrigen oder spezifischen pH-Umgebung auflöst, umfasst bzw. umfassen.

## Revendications

1. Procédé de fabrication d'un additif alimentaire comprenant un extrait déposé dans des particules de silice poreuse, lequel procédé comprend :
a. la réalisation d'une extraction de fluide supercritique d'un matériau végétal ou d'un matériau animal en utilisant un fluide d'extraction pour fournir un mélange du fluide d'extraction et de l'extrait ;
b. la mise en contact du mélange du fluide d'extraction et de l'extrait avec un volume contenu de particules de silice poreuse appropriées pour la consommation humaine, les particules de silice poreuse ayant des pores d'une taille qui permet la diffusion de l'extrait dans les particules de silice poreuse ;
c. la réduction de la pression ou le changement de la pression et de la température du fluide d'extraction de manière à ce que l'extrait se dépose dans les pores des particules de silice poreuse ;
d. la séparation du fluide d'extraction des particules de silice poreuse ; et
e. la fourniture d'un ou de plusieurs revêtements sur la surface extérieure des particules poreuses.

2. Procédé selon la revendication 1, comprenant en outre l'addition de l'additif alimentaire à un produit alimentaire.

3. Procédé selon la revendication 2, dans lequel le produit alimentaire est une boisson.

4. Procédé selon la revendication 1 dans lequel :
a. le mélange est fourni à une pression élevée de l'extraction du fluide supercritique ;
b. le mélange du fluide d'extraction et de l'extrait est mis en contact avec le volume contenu de particules de silice poreuse à la pression élevée ;
c. la réduction de la pression du mélange de manière à ce que l'extrait se dépose dans les pores des particules de silice poreuse séparé du fluide d'extraction gazeux.

5. Procédé selon l'une quelconque des revendications précédentes, dans lequel l'extrait est un extrait fugitif.

6. Procédé selon la revendication 5, dans lequel l'extrait fugitif est aussi un extrait comestible.

7. Procédé selon l'une quelconque des revendications précédentes, dans lequel la particule de silice poreuse a un diamètre entre 3 et 20 micromètres et une porosité essentiellement uniforme.

8. Procédé selon l'une quelconque des revendications précédentes, dans lequel l'extrait est choisi dans le groupe constitué par les arômes, les saveurs, les exhausteurs de saveur, les exhausteurs d'arôme, les exhausteurs de goût, les antioxydants, les vitamines, les agents bioactifs, les ingrédients fonctionnels, les nutraceutiques, les agents phytochimiques, les agents de dégustation et les couleurs naturelles.

9. Procédé selon l'une quelconque des revendications précédentes, dans lequel le fluide d'extraction est le dioxyde de carbone.

10. Procédé selon l'une quelconque des revendications précédentes, dans lequel les un ou plusieurs revêtements comprennent une barrière de diffusion, une barrière qui fond lorsqu'elle est placée dans un environnement chaud et/ou une barrière qui se dissout dans un environnement aqueux ou de pH spécifique.
